Europäisches Patentamt

European Patent Office

Office européen des brevets

(19)

(11) **EP 0 834 859 B1**

(12) **EUROPÄISCHE PATENTSCHRIFT**

(45) Veröffentlichungstag und Bekanntmachung des
Hinweises auf die Patenterteilung:
**20.03.2002  Patentblatt 2002/12**

(51) Int Cl.⁷: **G10L 15/06**

(21) Anmeldenummer: **97202959.9**

(22) Anmeldetag: **26.09.1997**

(54) **Verfahren zum Bestimmen eines akustischen Modells für ein Wort**

Method for determining an acoustic model for a word

Procédé de détermination d'un modèle acoustique pour un mot

(84) Benannte Vertragsstaaten:
**DE FR GB**

(30) Priorität: **01.10.1996  DE 19640502**

(43) Veröffentlichungstag der Anmeldung:
**08.04.1998  Patentblatt 1998/15**

(73) Patentinhaber:
• **Philips Corporate Intellectual Property GmbH**
**52064 Aachen (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Aubert, Xavier Louis, Dr.**
**Röntgenstrasse 24, 22335 Hamburg (DE)**
• **Beyerlein, Peter**
**c/o Philips Patentverwaltung GmbH**
**22335 Hamburg (DE)**
• **Ullrich, Meinhard Dieter**
**Röntgenstrasse 24, 22335 Hamburg (DE)**

(74) Vertreter: **Volmer, Georg, Dipl.-Ing.**
**Philips Corporate Intellectual Property GmbH,**
**Habsburgerallee 11**
**52064 Aachen (DE)**

(56) Entgegenhaltungen:

• **AUBERT X ET AL: "A bottom-up approach for handling unseen triphones in large vocabulary continuous speech recognition" PROCEEDINGS ICSLP 96. FOURTH INTERNATIONAL CONFERENCE ON SPOKEN LANGUAGE PROCESSING (CAT. NO.96TH8206), PROCEEDING OF FOURTH INTERNATIONAL CONFERENCE ON SPOKEN LANGUAGE PROCESSING. ICSLP '96, PHILADELPHIA, PA, USA, 3-6 OCT. 1996, Seiten 14-17 vol.1, XP002082057 ISBN 0-7803-3555-4, 1996, New York, NY, USA, IEEE, USA**
• **HWANG M -Y ET AL: "PREDICTING UNSEEN TRIPHONES WITH SENONES" SPEECH PROCESSING, MINNEAPOLIS, APR. 27 - 30, 1993, Bd. 2, 27. April 1993, Seiten II-311-314, XP000427788 INSTITUTE OF ELECTRICAL AND ELECTRONICS ENGINEERS**
• **DUGAST C ET AL: "APPLICATION OF CLUSTERING TECHNIQUES TO MIXTURE DENSITY MODELLING FOR CONTINUOUS-SPEECH RECOGNITION" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995, Seiten 524-527, XP000658046 INSTITUTE OF ELECTRICAL AND ELECTRONICS ENGINEERS**

• **ODELL J J ET AL: "Tree-based state clustering for large vocabulary speech recognition" ISSIPNN '94. 1994 INTERNATIONAL SYMPOSIUM ON SPEECH, IMAGE PROCESSING AND NEURAL NETWORKS PROCEEDINGS (CAT. NO.94TH0638-7), PROCEEDINGS OF ICSIPNN '94. INTERNATIONAL CONFERENCE ON SPEECH, IMAGE PROCESSING AND NEURAL NETWORKS, HONG KONG, 13-16 APRIL 1, Seiten 690-693 vol.2, XP002082058 ISBN 0-7803-1865-X, 1994, New York, NY, USA, IEEE, USA**

**Beschreibung**

Die Erfindung betrifft ein Verfahren zum Bestimmen eines akustischen Modells für ein Wort als eine Folge von Referenzwerten, die für die spätere Erkennung von Wörtern aus einem Sprachsignal benötigt werden.

Bei der Erkennung von Wörtern in einem Sprachsignal werden daraus zeitlich nacheinander Testsignale abgeleitet und mit Referenzwerten verglichen, wobei Folgen von Referenzwerten verschiedene Wörter darstellen, und die Referenzwerte, die die größte Ähnlichkeit mit den Testsignalen aufweisen, geben das am wahrscheinlichsten erkannte Wort an. Die Referenzwerte werden vorher in einer Trainingsphase aus dem Sprachsignal eines bekannten Textes abgeleitet, aus dem in gleicher Weise Testsignale abgeleitet werden, die zunächst zu Merkmalwerten zusammengefaßt werden, die akustische Zustände in den bekannten Wörtern angeben. Jedes Phonem im Wort hat eine Folge von akustischen Zuständen, und die für die einzelnen akustischen Zustände beobachteten Merkmalwerte werden für gleiche Phoneme zusammengefaßt, und zwar abhängig vom vorhergehenden und nachfolgenden Phonem, die zusammen mit dem mittleren Phonem ein Triphon bilden. Aus der Darstellung der Folge der akustischen Zustände über die Zeitachse von links nach rechts werden die Phoneme eines Triphon auch als linkes, zentrales und rechtes Phonem bezeichnet. Wenn die Merkmalwerte für die einzelnen akustischen Zustände in den Triphonen der bekannten Wörter ermittelt sind, werden Merkmalwerte der gleichen akustischen Zustände verschiedener Triphone, die vorgegebene Kriterien erfüllen, in schrittweise größeren Gruppen zusammengefaßt. Ein solches Kriterium ist insbesondere der Abstand von Merkmalwerten im Merkmalraum, und zwar werden solche Gruppen von Merkmalwerten, bei denen die am weitesten voneinander entfernt liegenden Merkmalwerte einen vorgegebenen Abstand unterschreitet, zu einer größeren Gruppe zusammen gefaßt. Ein weiteres Kriterium ist die Anzahl der Beobachtungen in jedem Merkmalwert. Wenn diese zu gering ist, wird ein solcher Merkmalwert mit der am nächsten liegenden Gruppe zu einer größeren Gruppe zusammengefaßt.

Wenn auf diese Weise die Gruppen alle gebildet worden sind, müssen die Wortmodelle für die Erkennung erzeugt werden. Jedes Wortmodell besteht aus einer Folge von Referenzwerten, die das Wort beschreiben. Dabei sei darauf hingewiesen, daß ein Referenzwert bei bekannten Spracherkennungsverfahren, insbesondere für ein großes Vokabular, keinen einzelnen Wert darstellt, sondern eine Verteilungsfunktion. Die Berücksichtigung von Triphonen bedeutet, daß für das zentrale Phonem in jedem Triphon der linke und der rechte Zusammenhang berücksichtigt wird, weil sich dieser Zusammenhang sehr stark auf die Aussprache des Phonems auswirkt.

Während der Trainingsphase wird ein Text begrenzter Länge gesprochen, in dem nicht alle in einer Sprache vorhandenen Triphone vorkommen. Dies liegt unter anderem daran, daß in dem Text begrenzter Länger nicht alle Wörter des Vokabulars gesprochen werden. Auch solche Wörter müssen jedoch modelliert werden, damit sie in der nachfolgenden Erkennungsphase auch erkannt werden können, wenn sie in dem Sprachsignal auftreten. Zwar kann davon ausgegangen werden, daß in der Trainingsphase alle Phoneme aufgetreten sind. Wenn jedoch in einem während der Trainingsphase nicht gesprochenen Wort ein Phonem als zentraler Teil eines Triphons vorhanden ist, das während der Trainingsphase nicht gesprochen wurde, kann dieses Triphon bzw. dieses Phonem im Rahmen dieses Triphons nicht ohne weiteres modelliert werden. Eine Möglichkeit, diese Schwierigkeit zu beheben, besteht darin, ein Phonem in einem nicht trainierten Triphon durch einen Referenzwerte zu ersetzen, der aus dem ggf. gewichteten Mittelwert aller in der Trainingsphase aufgetretenen Triphone mit diesem Phonem abgeleitet wird. Dies stellt jedoch eine schlechte Modellierung dar und führt zu einer erhöhten Fehlerrate bei der Erkennung.

Aufgabe der Erfindung ist es daher, ein Verfahren anzugeben, mit dem auch solche Wörter mit guter Genauigkeit modelliert werden können, die wenigstens ein Triphon enthalten, das während der Trainingsphase nicht aufgetreten ist.

Diese Aufgabe wird im wesentlichen dadurch gelöst, daß für ein solches nicht beobachtetes Triphon eine Gruppe ausgewählt wird, die demselben Phonem in Zusammenhang mit demselben linken oder demselben rechten Phonem zugeordnet ist. Es wird also die Ähnlichkeit eines Triphones mit gegebenem linken und mit gegebenem rechten Zusammenhang für jeweils den anderen Zusammenhang bestimmt, denn auch bei einem Text begrenzter Länge in der Trainingsphase treten die meisten der beiden Zusammenhänge tatsächlich auf. Diese Zuordnung zu Gruppen geschieht für jeden Zustand in diesem zu modellierenden Triphon, genauer gesagt für jeden Zustand des zentralen Phonems innerhalb des betreffenden Triphons, getrennt, wobei nur solche Gruppen ausgewählt werden, die zum gleichen Zustand in den beobachteten Triphonen gehören. Auf diese Weise ist es möglich, den Zusammenhang eines Phonems innerhalb eines Triphons weitgehend genau zu modellieren, so daß auf diese Weise auch für nicht während der Trainingsphase vorgekommene Wörter eine weitgehend gut zutreffende Folge von Referenzwerten gebildet werden kann.

Es ist durchaus möglich, daß dasselbe Phonem mit demselben linken oder demselben rechten Phonem und verschiedenem Phonem auf der anderen Seite in verschiedenen Gruppen vorkommt. Da in diesem Falle nicht direkt eindeutig eine Gruppe ausgewählt werden kann, wird diejenige Gruppe ausgewählt, in der die größte Anzahl der mit dem zu modellierenden Triphon übereinstimmenden Links- bzw. Rechts-Zusammenhänge vorhanden sind. Dadurch wird die Wahrscheinlichkeit sehr groß, daß eine richtige Modellierung gefunden wird.

Wie bereits erwähnt, wird für jeden Zustand des zu modellierenden nicht beobachteten Triphons nur eine solche Gruppe ausgewählt, die demselben Zustand zugeordnet ist. Da für die ersten Zustände in dem zu modellierenden Triphon, die bei Darstellung in der Zeitachse auf der linken Seite des zentralen Phonems liegen, der Einfluß des linken Phonems stärker sein wird als der des rechten Phonems im Triphon, während es für die letzten Zustände auf der rechten Seite umgekehrt ist, ist es nach einer weiteren Ausgestaltung der Erfindung zweckmäßig, für die ersten Zustände in dem zu modellierenden Triphon die Anzahl von Zusammenhängen mit demselben zentralen Phonem und demselben linken Phonem um einen festen Wert zu erhöhen, um deren Einfluß stärker zu machen. Das gleiche gilt für die letzten Zustände, für die die Anzahl von Zusammenhängen mit demselben zentralen Phonem und demselben rechten Phonem um einen festen Wert erhöht wird.

Es ist jedoch auch möglich, daß für bestimmte Triphone keine Gruppe vorhanden ist, die demselben zentralen Phonem in Verbindung mit demselben linken oder rechten Phonem wie das zu modellierende Triphon zugeordnet ist. In diesem Falle müssen die Regeln für das Aufsuchen einer Gruppe abgeändert werden. Eine Möglichkeit besteht darin, für einen bestimmten Zustand des zu modellierenden Triphons nicht eine Gruppe zu suchen, die demselben Zustand zugeordnet ist, sondern einem anderen Zustand. Anders gesprochen kann bei der Suche nach einer passenden Gruppe der Zustand ganz außer acht gelassen werden. Eine andere, ggf. zusätzliche Möglichkeit besteht darin, alle Gruppen zu untersuchen, die das linke oder das rechte Phonem in Zusammenhang mit irgendeinem zentralen Phonem enthalten, wobei die Anzahlen derartiger Triphone gewichtet werden. Diese Modellierung ist zwar nicht mehr so gut wie die anfangs beschriebene, ergibt jedoch immerhin noch brauchbare Referenzwerte für Wörter mit nicht trainierten Triphonen, die zu einer geringen Fehlerrate bei der Erkennung führen.

Das der Erfindung zugrunde liegende Problem und seine Lösung kann kurz mathematisch wie folgt formuliert sein:

$$\hat{K} = \arg\max_K \sum_{tr \in K} P(tr \mid tr')$$

$$= \arg\max_K \sum_{tr \in K} P(tr, tr')$$

Dies bedeutet, daß diejenige Gruppe $\hat{K}$ gefunden werden soll, bei der die Wahrscheinlichkeit, daß das zu modellierende Triphon tr' darin enthalten ist, gegeben bestimmte Triphone in dieser Gruppe, von allen Gruppen K am größten ist. Diese Wahrscheinlichkeit kann wie folgt umformuliert werden

$$P(tr, tr') \approx P_{c,s}(r,r') \, P_{c,s}(l,l')$$

Dies führt also zu der beschriebenen Lösung, die Gruppe zu suchen, die für das gleiche zentrale Phonem c und den gleichen Zustand das gleiche linke oder rechte Phonem l bzw. r aufweisen.

Einzelheiten der Erfindung werden nachstehend anhand der Zeichnung näher erläutert. Es zeigen

Figur 1 das Zusammenfassen von Merkmalwerten in Gruppen im Merkmalraum,
Figur 2 schematisch die Zuordnung eines zu modellierenden Triphons zu einer von verschiedenen Gruppen.

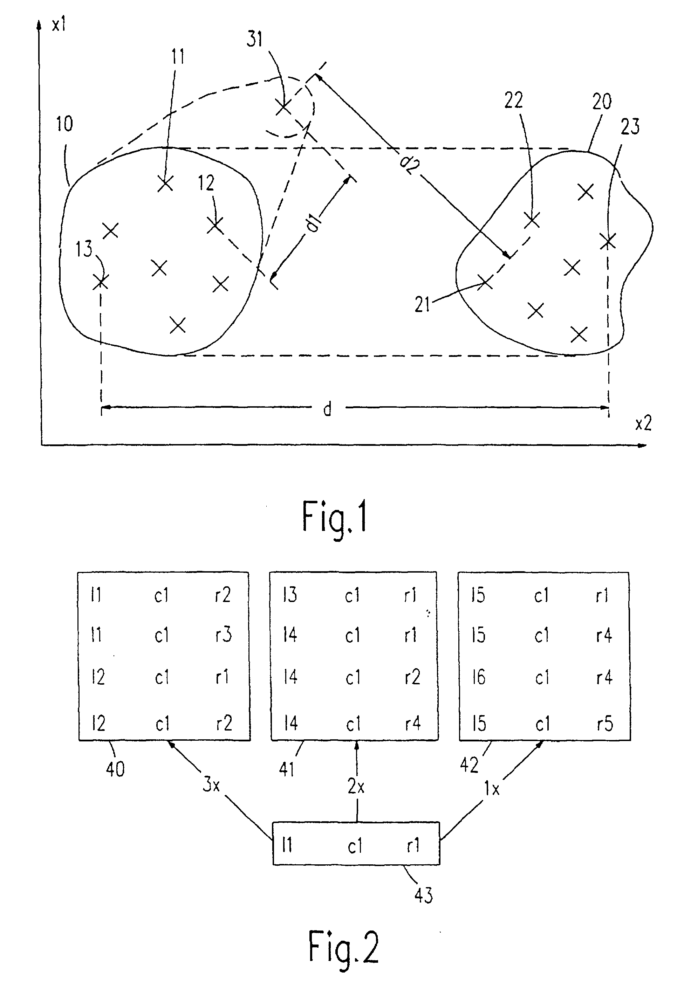

In Figur 1 ist stark vereinfacht eine Merkmalebene mit nur 2 Merkmalkomponenten x1 und x2 angedeutet. Bei der Spracherkennung enthalten die aus einem Sprachsignal abgeleiteten Testwerte und entsprechend die Merkmalwerte tatsächlich allgemein über 30 Komponenten. Es sind zwei Merkmalgruppen 10 und 20 angedeutet, die einzelne Merkmalwerte 11, 12, 13 usw. bzw. 21, 22, 23 usw. enthalten. Jede dieser Merkmalgruppen faßt die während einer Testphase aufgetretenen Beobachtungen eines bestimmten Triphons zusammen. Die beiden Merkmalgruppen 10 und 20 werden zu einer größeren Gruppe zusammen gefaßt, wenn der Abstand d der am weitesten auseinander liegenden Merkmalwerte in beiden Gruppen, in Figur 1 mit 13 und 23 bezeichnet, einen vorgegebenen Wert unterschreiten. Ebenso werden die beiden Gruppen 10 und 20 zusammengefaßt, wenn in wenigstens einer dieser Gruppen die Anzahl der Merkmalwerte unter einem vorgegebenen Wert liegt. Dies ist durch die gestrichelte Verbindung beider Gruppen angedeutet.

Der Merkmalwert 31 soll einen Merkmalwert eines Triphons darstellen, das in der Trainingsphase nur selten beobachtet wurde. Wenn angenommen wird, daß die beiden Gruppen 10 und 20 getrennte Gruppen sind, wird der Abstand d1 zwischen den Merkmalwerten 31 und 12 als nächster Merkmalwert der Gruppe 10 sowie der Abstand d2 zwischen den Merkmalwerten 31 und 21 als dem nächsten Merkmalwert der Gruppe 20 bestimmt, und der Merkmalwert 31 wird mit derjenigen Gruppe zusammengefaßt, für die der Abstand d1 bzw. d2 am kleinsten ist, wie hier ebenfalls gestrichelt angedeutet ist. Dabei wird angenommen, daß die Abstände d1 und d2 größer sind als der Abstand, bei dem zwei Gruppen vereinigt werden, da sonst aufgrund dieser Vereinigungsregel der Merkmalwert 31 ohnehin mit einer Gruppe vereinigt würde.

Auf diese Weise werden Gruppen von Merkmalwerten für die einzelnen beobachteten Triphone gebildet.

In Figur 2 sind schematisch drei Gruppen 40, 41 und 42 von Merkmalwerten dargestellt, wobei in jeder Gruppe die Merkmalwerte für vier verschiedene Triphone angegeben sind. Jedes Triphon besteht aus einem linken Phonem l, einen zentralen Phonem c und einem rechten Phonem r. Die Zahl bei jedem Phonem unterscheidet verschiedene Phoneme. Es soll nun festgestellt werden, welcher dieser Gruppen ein Triphon 43 mit den Phonemen l1, c1 und r1 zugeordnet werden soll. Dieses Triphon 43 ist während der Trainingsphase nicht aufgetreten, und es soll diejenige Gruppe gesucht werden, in die dieses Triphon 43 mit größter Wahrscheinlichkeit aufgenommen wäre, wenn es während der Trainingsphase aufgetreten wäre. Dazu wird in jeder Gruppe 40, 41 und 42 gezählt, wie oft die Kombination l1 und c1 mit beliebigem r oder die Kombination r1, c1 mit beliebigem l aufgetreten ist. Dies ist in der Gruppe 40 dreimal der Fall, in der Gruppe 41 zweimal und in der Gruppe 42 einmal. Das Triphon 43 wird daher der Gruppe 40 zugeordnet, weil dort der Zusammenhang zwischen dem zentralen Phonem c1 und einem der seitlichen Phoneme l1 oder r1 am häufigsten aufgetreten ist. Die Gruppe 40 liefert dann den Referenzwert zur Verwendung bei der Erkennung für den betreffenden Zustand des Triphon 43.

**Patentansprüche**

1. Verfahren zum Bestimmen eines akustischen Wortmodells eines ersten Wortes in Form von einer Folge von Referenzwerten mit folgenden Schritten

   - in einer Trainingsphase werden aus Sprachsignalen verschiedener anderer Wörter zu wiederholten Zeitpunkten Merkmalwerte abgeleitet, die aufeinanderfolgende akustische Zustände in Triphonen in den Wörtern angeben, wobei jedes Triphon aus einem linken, einem zentralen und einem rechten Phonem besteht,
   - Merkmalwerte der gleichen akustischen Zustände verschiedener Triphone, die vorgegebene Kriterien erfüllen, werden in Gruppen zusammengefaßt,
   - für die Modellierung eines Triphons im ersten Wort, das nicht in der Trainingsphase beobachtet wurde, wird für jeden Zustand dieses Triphons diejenige Gruppe ausgewählt, die solchen beobachteten Triphonen zugeordnet ist, die dasselbe zentrale Phonem und dasselbe linke oder dasselbe rechte Phonem aufweisen, und jede ausgewählte Gruppe bildet einen Referenzwert für das Wortmodell.

2. Verfahren nach Anspruch 1, **dadurch gekennzeichnet, daß** für jeden Zustand in einem zu modellierenden Triphon diejenige Gruppe ausgewählt wird, die demselben Zustand der beobachteten Triphone mit der größten Anzahl von Kombinationen aus dem selben zentralen Phonem und demselben linken oder rechten Phonem wie in dem zu modellierenden Triphon zugeordnet ist.

3. Verfahren nach Anspruch 2, **dadurch gekennzeichnet, daß** für die ersten Zustände in dem zum modellierenden Triphon die Anzahl von Kombinationen mit demselben zentralen Phonem und demselben linken Phonem und für die letzten Zustände die Anzahl von Kombinationen mit demselben zentralen Phonem und demselben rechten Phonem um einen festen Wert erhöht wird.

4. Verfahren nach einem der vorgehenden Ansprüche, **dadurch gekennzeichnet, daß** für jeden Zustand in dem zu modellierenden Triphon eine Gruppe gesucht wird, die denselben Zustand in den beobachteten Triphonen mit demselben zentralen Phonem und demselben linken oder rechten Phonem zugeordnet ist, und nur falls eine solche Gruppe nicht vorhanden ist, eine Gruppe gesucht wird, die einem anderen, vorzugsweise dem benachbarten Zustand, zugeordnet ist.

5. Verfahren nach einem der vorhergehenden Ansprüche, **dadurch gekennzeichnet, daß** für den Fall, daß keine Gruppe mit demselben zentralen Phonem und demselben linken bzw. rechten Phonem wie das zu modellierende Triphon vorhanden ist, eine Gruppe gesucht wird, die dasselbe linke bzw. rechte Phonem mit anderen zentralen Phonemen enthält, wobei die Anzahlen derartiger Triphone in den untersuchten Gruppe gewichtet werden.

**Claims**

1. A method of determining an acoustic word model of a first word in the form of a sequence of reference values, which method includes the following steps:

   - deriving characteristic values from speech signals of various other words at recurrent instants during a training phase, said characteristic values representing successive acoustic states in triphones in the words, each triphone consisting of a left-hand phoneme, a central phoneme and a right-hand phoneme,
   - combining characteristic values of the same acoustic states of different triphones which satisfy predetermined criteria so as to form groups,
   - selecting, for the modeling of a triphone in the first word which has not been observed during the training phase, for each state of this triphone that group which is associated with triphones observed which have the same central phoneme and the same left-hand phoneme or the same right-hand phoneme, each selected group forming a reference value for the word model.

2. A method as claimed in Claim 1, **characterized in that** for each state in a triphone to be modeled there is selected that group which is associated with the same state of the triphone observed with the largest number of combinations of the same central phoneme and the same left-hand phoneme or the right-hand phoneme as in the triphone to be modeled.

3. A method as claimed in Claim 2, **characterized in that** for the first states in the triphone to be modeled the number of combinations with the same central phoneme and the same left-hand phoneme is increased by a fixed value and also the number of combinations with the same central phoneme and the same right-hand phoneme for the last states.

4. A method as claimed in one of the preceding Claims, **characterized in that** for each state in the triphone to be modeled there is searched a group which is associated with the same state in the triphones observed with the same central phoneme and the same left-hand or the same right-hand phoneme, and that it is only if such a group is not available that a group is searched which is associated with another state which is preferably the neighboring state.

5. A method as claimed in any one of the preceding claims, **characterized in that** in the case of absence of a group with the same central phoneme and the same left-hand phoneme or the same right-hand phoneme as the triphone to be modeled, a group is searched which contains the same left-hand or right-hand phoneme with other central phonemes, the numbers of such triphones in the group examined being weighted

## Revendications

1. Procédé de détermination d'un modèle de mots acoustique d'un premier mot sous la forme d'une séquence de valeurs de référence avec différentes étapes:

   - dans une phase de formation, sont dérivées de signaux de parole de différents autres mots à intervalles répétés des valeurs caractéristiques qui indiquent les états acoustiques successifs dans des triphones dans les mots, chaque triphone se composant d'un phonème gauche, d'un phonème central et d'un phonème droit,
   - des valeurs caractéristiques des mêmes états acoustiques de différents triphones qui remplissent des critères préalablement déterminés sont rassemblées en groupes,
   - pour la modélisation d'un triphone dans le premier mot qui n'a pas été observé dans la phase de formation, est sélectionné pour chaque état de ce triphone le groupe qui est affecté à de tels triphones observés qui présentent le même phonème central et le même phonème gauche ou le même phonème droit et chaque groupe sélectionné forme une valeur de référence pour le modèle de parole.

2. Procédé selon la revendication 1, **caractérisé en ce que**, pour chaque état dans un triphone à modéliser, est sélectionné le groupe qui est affecté au même état des triphones observés avec le plus grand nombre de combinaisons du même phonème central et du même phonème gauche ou droit que dans le triphone à modéliser.

3. Procédé selon la revendication 2, **caractérisé en ce que**, pour les premiers états dans le triphone à modéliser, le nombre de combinaisons avec le même phonème central et le même phonème gauche et, pour les derniers états, le nombre de combinaisons avec le même phonème central et le même phonème droit est majoré d'une valeur fixe.

4. Procédé selon l'une des revendications précédentes, **caractérisé en ce que**, pour chaque état dans le triphone à modéliser, on recherche un groupe qui est affecté au même état dans les triphones observés avec le même phonème central et le même phonème gauche ou droit et c'est uniquement si un tel groupe n'est pas présent qu'on recherche un groupe qui est affecté à un autre état, de préférence voisin.

5. Procédé selon l'une des revendications précédentes, **caractérisé en ce que**, pour le cas où aucun groupe n'est présent avec le même phonème central et le même phonème gauche ou droit que le triphone à modéliser, on recherche un groupe qui contient le même phonème gauche ou droit avec d'autres phonèmes centraux, les nombres de tels triphones étant pondérés dans le groupe étudié.

Fig.1

Fig.2